# EUROPEAN PATENT SPECIFICATION

(11) **EP 0 313 349 B1**
(45) Date of publication and mention of the grant of the patent: **13.01.1993**
(21) Application number: 88309852.7
(22) Date of filing: 20.10.1988
(51) Int. Cl.: C09D 11/00

(54) **Ink composition for a drop-on-demand ink jet printer**
Tintenmasse für einen Tröpfchenstrahldrucker
Composition d'encre pour imprimante à jet d'encre non continu

(30) Priority: 22.10.1987 US 111225
(43) Date of publication of application: 26.04.1989
(73) Proprietor: LEXMARK INTERNATIONAL, INC., Greenwich, Connecticut 06830 (US)
(72) Inventor: Gendler, Paul Lewis, San Jose, CA 95123 (US); Sporer, Alfred Herbert, San Jose, CA 95124 (US); Stremel, Donald Allen, Northglenn Colorado 80233 (US)
(74) Representative: Skailes, Humphrey John

(56) References cited:
- DE-A- 2 551 242
- US-A- 4 455 168
- PATENT ABSTRACTS OF JAPAN, vol. 10, no. 214 (C-362)[2270], 25th July 1986; & JP-A-61 55 172 (KONISHIROKU PHOTO IND. CO., LTD) 19-03-1986

## Description

This invention relates to ink compositions for drop-on-demand ink jet printers for the prevention of ink nozzle failures.

In continuous ink jet printers, ink compositions normally contain a high proportion of water because good print quality is thereby obtainable on a wide range of office papers. In drop-on-demand ink jet printers the problem that results from the use of ink compositions with a high proportion of water is that, during the dormancy period of the printer, when the printer is not performing a printing operation, the water evaporates in the very fine ink jet nozzles which results in the precipitation of the components in the ink with resultant nozzle clogging. In continuous ink jet printers, during the dormancy period the nozzle is continuously ejecting ink into a gutter. On startup after shutdown when no ink is being ejected from the nozzle, external pressure is applied to the ink in the nozzle which results in the ejection of any plugs or precipitates from the nozzle. In drop-on-demand printers there is no source of external pressure to clear plugs or clogs in the nozzles. The only pressure is that supplied by the printhead pulse generator, which is much lower than that obtainable in a continuous ink jet printer.

In known drop-on-demand printers, the solution to this problem is to use an ink composition having a high proportion of non-volatile liquid, miscible with water in all proportions, and which is a solvent for the ink colorant. By adjusting the ratio of the non-volatile liquid to the water the evaporation rate of the water is reduced and the colorant remains dissolved even as the fluid ratio changes so that precipitation of colorant no longer causes nozzle failure by clogging. The generally preferred ink compositions for reduced nozzle failures by clogging in drop-on-demand printers are those whose water content is less than 50%. While ink compositions with less than 50% water are preferred for reducing nozzle clogging they are not preferred for print quality or for drying time on normal paper. Such drop-on-demand ink jet printers must use special paper to obtain reasonable print quality and acceptable drying time. The problem, therefore, is that the present drop-on-demand printers use an ink composition which provides a compromise between low nozzle failure and good print quality on a wide range of paper.

US-A-3,705,043 describes an aqueous ink composition suitable for use in a continuous ink jet printer which comprises carbon black and from 5 to 30% by weight of a non-volatile, water miscible fluid selected from the group consisting of the lower alkylene glycols and alkyl ethers of the lower alkylene glycols. US-A-3,846,141 describes an aqueous ink composition for use in a continuous ink jet printer which comprises from 5 to 40% by weight of a non-volatile, water miscible fluid selected from the group of lower alkoxy glycols and at least one compound selected from the group consisting of polyethylene glycol, polypropylene glycol, a lower alkyl ether of ethylene glycol, diethylene glycol, propylene glycol and glycerol.

US-A-4,239,543 describes a method for preparing aqueous ink compositions with improved tip-dry characteristics and improved anti-gassing characteristics for use in either continuous ink jet or drop-on-demand printers. Such ink compositions use lower alkylene glycols, such as ethylene and propylene glycols, as the water miscible, non-volatile fluid. Fluid compositions in the range from 20 to 97% glycol are described in all the examples and the 'preferred' fluid compositions are in the range from 50 to 90%. The higher concentrations of glycols are clearly preferred because of their importance in reducing nozzle clogging. US-A-4,153,593 describes the use of fluorescent dyes in an aqueous ink composition for a continuous ink jet printer. The patent describes a list of water soluble, film-forming, low to medium molecular weight resins, including a hydantoin-formaldehyde resin, which are added to an ink composition to act as a film binder of the fluorescent dye on any substrate. The resin films were selected because they do not interfere with the subsequent fluorescence of the dye. This patent refers to the addition from 2 to 30% by weight of non-volatile, water-miscible humectants such as the lower alkylene glycols, etc. as described in US-A-3,705,043.

JP-A-6155172 describes aqueous ink compositions containing a hydantoin derivative and a wetting agent such as ethylene glycol.

Despite the claims of the above patents regarding the effectiveness of the disclosed alkylene glycols and ethers, there continue to be efforts to find more effective additives which would result in improved nozzle maintenance with lower concentrations of the non-volatile, water miscible component. The reasons are that the drying time of the ink increases, the viscosity increases and the print quality deteriorates with the known ink composition. For example, US-A-4,184,881 describes the addition of 14% by weight of Surfynol 485 "which substantially prevents tip-drying of the ink in the nozzle" in a continuous ink jet printer. US-A-4,455,168 describes the addition of 5% of an amino-containing propylene glycol with 5% glycerin and 10% diethylene glycol "which does not result in plugging of the nozzle" in continuous ink jet printing.

The object of the present invention is to provide an improved ink composition for use in a drop-on-demand ink jet printer.

The invention consists of a substantially aqueous ink composition for a drop-on-demand ink jet printer comprising a fluid vehicle with greater than 50% by weight of water, a water soluble dye in the range of from 1 to 10% by weight, and a lower alkylene glycol plasticizer in the range of concentration of from 1 to 20% by weight, and, in the range of from 1 to 10% by weight, a water soluble additive which is a low molecular weight heterocyclic, bifunctional monomer or dimer in which the two functional groups are either two imide groups or a hydantoin bearing a carboxylic acid group, with both the imide groups and the amide groups being capped with hydroxyalkylene units.

It is believed such an ink composition has a reduced evaporation rate of the water in the ink composition by the formation of an in situ film or membrane on the surface of the ink in the nozzle during the dormancy period of the printer. The film or membrane acts as a physicochemical cap at the nozzle surface which cap reduces the evaporation rate of the water in the ink composition to that which is conventionally obtained by admixture of high proportions of non-volatile, water miscible fluids into an ink composition.

Many materials are known which when added to water reduce their evaporation rate. There are known, very slightly soluble, surface active additives which form a monolayer on the surface of the water which reduce its evaporation rate. An excellent review of materials that perform in this manner is given in Advances in Colloid and Interface Science, 25, pp. 89-200, (1986). In Table VI, p. 154 of that article is listed a large number of these compounds. In general, the compounds are materials with a polar end group and a non-polar tail such as the higher alkyl acids, alcohols, and selected esters. The use of these additives in inks usually presents a problem of one sort or another.

Water soluble polymers are another class of additives that reduce the evaporation rate of water. Unfortunately, in drop-on-demand ink jet printers they also cause nozzle failures by clogging. Water soluble polymers are generally added to ink compositions to impart the desired viscosity or the desired film forming characteristics to the ink. The reduction in evaporation rate is only an incidental characteristic of polymer addition for continuous ink jet printer inks because, as previously explained, the evaporation rate of water is a lesser concern in continuous ink jet printers. In drop-on-demand printers there is much greater sensitivity between the thickening and film forming properties of polymers, on the one hand, and failure of the ink in the nozzle on the other hand. While these polymers reduce the evaporation rate of water they also form a viscous plug in the nozzle. At the molecular weights generally useful for thickening solutions or for film formation, this plug is generally too viscous for it to be ejected from the nozzle by the low force supplied by the drop-on-demand pressure pulse generator. Only in continuous ink jet printers is there sufficient pressure available to eject such viscous plugs at startup. As mentioned previously, in continuous ink jet printers, during the dormancy period when the printer is not printing the nozzle is continuously ejecting ink into a gutter.

Certain low molecular weight materials can be used to reduce the evaporation rate of water in an ink composition used in a drop-on-demand printer. During the dormancy period of the printer when ink is not being ejected from the nozzle, these materials form a film or membrane at the surface of the ink in the nozzle as the water evaporates. The film is weak enough to be rupturable by the low pressure pulse of a drop-on-demand printhead. To be rupturable at low pressure after long dormancy periods the molecular weight of the desired water soluble additives must be low enough to permit back diffusion such that the steady state thickness of the film remains relatively thin and rupturable. The dye itself becomes incorporated in the film and alters its rupture yield point. To maintain a low rupture yield point water miscible alkylene glycols can be added to the fluid. These glycol additives are known to reduce the evaporation rate of water but when mixed with certain other additives the alkylene glycols plasticize the resulting film, or membrane, which lowers the rupture yield point but at the expense of increasing the rate of evaporation of the water.

One additive which can be used is a dimer of 5,5-dimethylhydantoinformaldehyde resin. This resin is among those listed in US-A-4,153,593 which describes the use of low-to-medium molecular weight water soluble polymers or resins with fluorescent dyes in continuous ink jet printers as film forming additives. Polymers or resins such as the poly(alkylene glycols), polyvinyl alcohols, polyhydroxyalkyleneimines and a number of others, including the above hydantoin-formaldehyde resin, are listed. These polymers are selected for their film-forming properties without interference with the fluorescence of their fluorescent dyes. The higher molecular weight components of, for example, the hydantoin-formaldehyde resin, are preferred for formation of good fluorescent films. As previously mentioned, these higher molecular weight polymeric additives pose a lesser nozzle maintenance problem in continuous ink jet printers than in drop-on-demand ink jet printers. Therefore US-A-4,153,593 makes no note of any differences among them relating to the maintenance in a continuous ink jet printer.

In the invention of the present application, the low molecular dimers of 5,5-dimethylhydantoin-formaldehyde resin are preferred precisely because they form a weak film. In fact, the films formed by the commercially available mixture of low and high molecular weight oligomers of the hydantoin-formaldehyde resin require the addition of glycols to plasticize and weaken them. As further proof that the effective components of the hydantoin-formaldehyde resin are the dimers, if the commercially available hydantoin-formaldehyde resin is heated, it is found that the high molecular weight components are enhanced relative to the low molecular weight dimers and it loses its effectiveness as a nozzle clogging prevention additive.

As additional proof of the importance of the low molecular weight dimer oligomers of the hydantoin-formaldehyde resin, it can be demonstrated that monomers and dimers of other materials of similar structure can be useful. Certain additives are from three to five times more effective than glycols in reducing the evaporation rate of water. These additives are low molecular weight heterocyclic, bifunctional monomers or dimers in which the two functional groups are either two imide groups, or a hydantoin bearing a carboxylic acid group, with both the imide groups and the amide groups being capped with hydroxyalkylene units. Examples of structures which satisfy those requirements are: 1,1'(1,1-ethylidene)bishydantoin, alloxan and 5-hydantoinacetic acid. It is believed that in use alloxan undergoes rearrangement to alloxanic acid.

Examples of end-capping structures which are useful are: formaldehyde, glyoxal and glyoxylic acid.

This is not an exhaustive list of possible materials. These examples are given as illustrations and are not to be construed as limitations on the present invention. Persons versed in the chemical arts will recognise other possibilities.

The film forming additive is present in the ink at about from 1 to 10% by weight. A lower alkylene glycol plasticizer, preferably ethylene glycol is present at about from 1 to 20% by weight. A water soluble dye, for example, nigrosin, Food Black 2, Direct Black 2, Direct Black 163, or Mobay Special Black SP Liquid, is present at about from 1 to 10% weight. The balance of the ink is water, although other optional ingredients such as biocides, buffers, dye solubilizers, and foam suppressors may also be present, if desired.

That these materials reduce the evaporation rate of water is shown in the following examples:

### Example 1 5,5-dimethylhydantoin-formaldehyde

A 0.5 mm internal diameter x 32 mm long capillary tube was nearly filled with the test solution. One end of the capillary tube was sealed with hexadecane, a non-volatile liquid completely insoluble in water solutions. The capillary tube was then mounted vertically on a microbalance so that the unsealed end was at the bottom. In this position, gravitational force maintained the water solution at the front of the capillary tube during evaporation. The weight of the capillary tube was measured within the first minute after mounting and the weight loss was recorded periodically thereafter over a period of at least 6 hours. During the run the humidity was in the range of from 50 to 55% and the temperature was 21 degrees C. Deionised water evaporated at a constant rate. The addition of 5,5-dimethylhydantoin-formaldehyde caused the evaporation rate of the water to decrease with time and this decrease was accelerated with increasing amounts of 5,5-dimethylhydantoin-formaldehyde. The change in evaporation rate is explained by the buildup of a thicker film at the capillary tube opening with time of evaporation. The reduction in the rate of water evaporation due to the use of 9% by weight of 5,5-dimethylhydantoin-formaldehyde is close to that due to the use of 50% by weight of ethylene glycol.

### Example 2 alloxan/glyoxylic acid

Same setup and conditions as in Example 1. 6% by weight of alloxan/glyocylic acid is equivalent to 20% by weight of ethylene glycol in reducing the evaporation rate of water by six times.

### Example 3 ethylene glycol

Same setup and conditions as in Example 1. This is the conventional additive for the reduction of water evaporation by the addition of a non-volatile, water miscible fluid. The effectiveness in reducing the evaporation rate of water by 20% by weight ethylene glycol is about the same as 6% by weight of 5,5-dimethylhydantoin-formaldehyde, and the effectiveness of 50% by weight of ethylene glycol is about the same as 9% by weight of 5,5-dimethylhydantoin-formaldehyde. 5,5-dimethylhydantoin-formaldehyde is therefore three to five times more effective than ethylene glycol in this regard.

### Example 4 1,1'(1,1 ethylidene)bishydantoin/glyoxylic acid

Same setup and conditions as in Example 1. The use of 6% by weight of 1,1'(1,1 ethylidene)bishydantoin/glyoxylic acid is as effective as 20% by weight of ethylene glycol in the reduction of the evaporation rate of water.

### Example 5 5 hydantoinacetic acid/glyoxylic acid

Same setup and conditions as in Example 1. The use of 6% by weight of 5-hydantoinacetic acid/glyoxylic acid is shown to be as effective as 20% by weight of ethylene glycol.

### Example 6 nozzle maintenance of an ink in an Hewlett-Packard ThinkJet (Trade Mark) printer

A ThinkJet printer was used as a test vehicle. The ThinkJet printer was programmed to print a few lines consisting of character boxes made up of a 9x6 array of spots and then to remain dormant for controlled lengths of time from a few seconds to 24 hours from the end of printing the last line to the beginning of printing the next line. (The periodic 'spitting' mechanism on the printer was avoided by omitting the descender nozzles from the test). The ink in the ThinkJet cartridge was removed from the cartridge and replaced with the test ink. The maintenance of the test ink was measured by counting the number of print pulses required before eight-out-of-nine nozzles were printing. The more pulses required after a given dormancy period the lower is the maintenance rating of the ink.

The following test inks were prepared and tested in the printer:
1. 5% by weight of Direct Black 163; 5% by weight of ethylene glycol in water;
2. 5% by weight of Direct Black 163; 6% by weight of 5,5-dimethylhydantoin-formaldehyde in water;
3. 5% by weight of Direct Black 163; 5% by weight of ethylene glycol; 6% by weight of 5,5-dimethylhydantoin-formaldehyde.

The test results are as follows:
Ink 1 required 40,000 pulses after a dormancy period of 8 hours and failed at the 16 hour dormancy period.

Ink 2 required 5,000 pulses after 8 hours and 45,000 pulses after 16 hours. It failed at the 24 hour dormancy period.

Ink 3 required the same number of pulses after 8 and 16 hour dormancy periods but did not fail at the 24 hour dormancy period and only required 8,000 pulses after that time.

## Claims

1. A substantially aqueous ink composition for a drop on demand ink jet printer comprising:
a fluid vehicle with greater than 50% by weight of water,
a water soluble dye in the range of from 1 to 10% by weight, and
a lower alkylene glycol plasticizer in the range of concentration of from 1 to 20% by weight, and,
in the range of from 1 to 10% by weight, a water soluble additive which is a low molecular weight heterocyclic, bifunctional monomer or dimer in which the two functional groups are either two imide groups or a hydantoin bearing a carboxylic acid group, with both the imide groups and the amide groups being capped with hydroxyalkylene units.

2. An ink composition as claimed in claim 1 characterised in that the additive is a dimer of 5,5-dimethylhydantoin-formaldehyde.

3. An ink composition as claimed in claim 1 characterised in that the additive is formed from alloxan and glyoxylic acid.

4. An ink composition as claimed in claim 1 characterised in that the additive is formed from 1,1'(1,1 ethylidene)bishydantoin and glyoxylic acid.

5. An ink composition as claimed in any one of the preceding claims characterised in that the plasticizer is ethylene glycol.

6. An ink composition as claimed in any one of the preceding claims characterised in that the dye is water soluble nigrosin.

7. An ink composition as claimed in any one of the preceding claims 1 to 5 characterised in that the dye is Food Black 2.

8. An ink composition as claimed in any one of the preceding claims 1 to 5 characterised in that the dye is Direct Black 163.

9. An ink composition as claimed in any one of the preceding claims 1 to 5 characterised in that the dye is Mobay Special Black SP Liquid.

## Patentansprüche

1. Eine im wesentlichen wässrige Tintenzusammensetzung für einen Tropfen-bei-Bedarf-Tintenstrahldrucker, mit
einem Fluidbindemittel mit mehr als 50 Gew.-% Wasser,
mit einem wasserlöslichen Farbstoff in dem Bereich von 1 bis 10 Gew.-%, und
einem niedrigeren Alkylenglykol-Plastifizierer in einem Konzentrationsbereich von 1 bis 20 Gew.-%, und
mit einem wasserlöslichen Zusatz im Bereich von 1 bis 10 Gew.-%, der aus einem heterozyklischen bifunktionalen Monomer oder Dimer mit niedrigem Molekulargewicht besteht, bei dem die zwei funktionalen Gruppen entweder zwei Imid-Gruppen oder ein Hydantoin sind, welche eine karboxylische Säuregruppe trägt, wobei sowohl die Imid-Gruppen als auch die Amid-Gruppen mit Hydroxyalkyleneinheiten gekappt sind.

2. Tintenzusammensetzung nach Anspruch 1, dadurch **gekennzeichnet,** daß der Zusatz ein Dimer von 5,5-Dimethylhydantoin-Formaldehyd ist.

3. Tintenzusammensetzung nach Anspruch 1, dadurch **gekennzeichnet,** daß der Zusatz gebildet ist aus einer Alloxan- und Glyoxalsäure.

4. Tintenzusammensetzung nach Anspruch 1, dadurch **gekennzeichnet,** daß der Zusatz gebildet ist aus einer 1,1'(1,1 Ethyliden)Bishydantoin und Glyoxalsäure.

5. Tintenzusammensetzung nach einem der vorhergehenden Ansprüche, dadurch **gekennzeichnet,** daß der Plastifizierer Ethylenglykol ist.

6. Tintenzusammensetzung nach einem der vorhergehenden Ansprüche, dadurch **gekennzeichnet,** daß der Farbstoff wasserlösliches Nigrosin ist.

7. Tintenzusammensetzung nach einem der vorhergehenden Ansprüche 1 bis 5, dadurch **gekennzeichnet,** daß der Farbstoff Food Black 2 ist.

8. Tintenzusammensetzung nach einem der vorhergehenden Ansprüche 1 bis 5, dadurch **gekennzeichnet,** daß der Farbstoff Direct Black 163 ist.

9. Tintenzusammensetzung nach einem der vorhergehenden Ansprüche 1 bis 5, dadurch **gekennzeichnet,** daß der Farbstoff eine Mobay Special Black SP Flüssigkeit ist.

## Revendications

1. Composition d'encre pratiquement aqueuse pour une imprimante à jet d'encre non continu comprenant :
un véhicule liquide ayant plus de 50% en poids d'eau,
un colorant soluble dans l'eau à raison de 1 à 10% en poids,
un plastifiant de type alkylène glycol inférieur à une concentration de l'ordre de 1 à 20% en poids et
de l'ordre d'environ 1 à 10% en poids d'un additif soluble dans l'eau qui est un monomère ou un dimère bifonctionnel hétérocyclique de bas poids moléculaire, dans lequel les deux groupes fonctionnels sont deux groupes imides ou une hydantoïne portant un groupe acide carboxylique, les groupes imide et les groupes amides étant tous deux coiffés par des unités hydroxyalkylène.

2. Composition d'encre suivant la revendication 1, caractérisée en ce que l'additif est un dimère de 5,5-diméthylhydantoïne-formaldéhyde.

3. Composition d'encre suivant la revendication 1, caractérisée en ce que l'additif est formé à partir d'alloxane et d'acide glyoxylique.

4. Composition d'encre suivant la revendication 1, caractérisée en ce que l'additif est formé à partir de 1,1'-(1,1-éthylidène)bishydantoïne et d'acide glyoxylique.

5. Composition d'encre suivant l'une quelconque des revendications précédentes, caractérisée en ce que le plastifiant est l'éthylène glycol.

6. Composition d'encre suivant l'une quelconque des revendications précédentes, caractérisée en ce que le colorant est une nigrosine soluble dans l'eau.

7. Composition d'encre suivant l'une quelconque des revendications 1 à 5, caractérisée en ce que le colorant est le Food Black 2.

8. Composition d'encre suivant l'une quelconque des revendications 1 à 5, caractérisée en ce que le colorant est le Direct Black 163.

9. Composition d'encre suivant l'une quelconque des revendications 1 à 5, caractérisée en ce que le colorant est du Mobay Special Black SP Liquid.
